# EUROPÄISCHE PATENTSCHRIFT

(11) **EP 3 455 043 B1**
(45) Veröffentlichungstag und Bekanntmachung des Hinweises auf die Patenterteilung: **30.09.2020**
(21) Anmeldenummer: 17720168.8
(22) Anmeldetag: 04.05.2017
(51) Int. Cl.: B29B 7/84, B29B 7/82, B29B 7/48, B29C 48/76, B29C 48/875, C08J 3/00, C08J 3/20, B29B 9/06, B29C 48/03, B29C 48/25, B29C 48/29, B29K 9/06, B29K 21/00

(54) **VERFAHREN ZUR HERSTELLUNG EINER THERMOPLASTISCHEN FORMMASSE**
METHOD FOR PRODUCING A THERMOPLASTIC MOULDING MATERIAL
PROCÉDÉ POUR LA PRÉPARATION D'UNE MASSE DE MOULAGE THERMOPLASTIQUE

(30) Priorität: 10.05.2016 EP 16168844
(43) Veröffentlichungstag der Anmeldung: 20.03.2019
(73) Patentinhaber: INEOS Styrolution Group GmbH, 60325 Frankfurt am Main (DE)
(72) Erfinder: FISCHER, Wolfgang, 69190 Walldorf (DE)
(74) Vertreter: Jacobi, Markus Alexander
(86) Internationale Anmeldenummer: PCT/EP2017/060619
(87) Internationale Veröffentlichungsnummer: WO 2017/194380

(56) Entgegenhaltungen:
- EP-A1- 0 490 056
- EP-A1- 0 735 077
- EP-A1- 1 400 337
- WO-A1-02/28618
- DE-A1- 2 359 901
- DE-A1- 10 058 133
- DE-A1- 19 728 629

## Beschreibung

Die vorliegende Erfindung betrifft ein Verfahren zur Herstellung einer thermoplastischen Formmasse mittels eines Extruders, wobei der Extruder eine Eintragszone, einen Durchmischungsabschnitt, einen Entgasungsabschnitt und eine Austragszone umfasst. Dabei werden in der Eintragszone eine Wasser enthaltende erste Komponente der thermoplastische Formmasse sowie eine zweite Komponente der thermoplastischen Formmasse zugeführt, in dem Durchmischungsabschnitt wird die thermoplastische Formmasse durchmischt und enthaltenes Wasser verdampft, in dem Entgasungsabschnitt wird Wasserdampf aus der thermoplastischen Formmasse entfernt, und in der Austragszone wird die thermoplastische Formmasse ausgetragen.

Aus dem Stand der Technik ist es bekannt, thermoplastische (Co)polymere, wie Acrylnitril-Butadien-Styrol (ABS) oder Acrylnitril-Styrol-Acrylat (ASA) mittels eines Extruders, insbesondere mittels eines Doppelschneckenextruders herzustellen. Dabei werden die Edukte, insbesondere Styrol-Acrylnitril-Copolymer (SAN) und Polybutadien, bzw. Acrylat-Kautschuk, einem Extruder zugeführt. Innerhalb des Extruders erfolgt eine Aufschmelzung und Mischung, beziehungsweise Dispergierung der Edukte zu einer Formmasse bzw. einem Polymer-Blend. Dabei wird das zugeführte Polybutadien, bzw. der Acrylat-Kautschuk, in einer Styrol-Acrylnitril-Matrix dispergiert.

Aus der WO 2009/103714 A2 ist ein Doppelschneckenextruder zum Extrudieren von Formmassen bekannt. Der Doppelschneckenextruder umfasst dabei zwei Schnecken, welche in einem Gehäuse aufgenommen sind, und welche gleichsinnig rotieren. Der Doppelschneckenextruder umfasst ferner eine Einzugszone, eine Umwandlungszone und eine Austragszone. Die Edukte werden der Einzugszone zugeführt, welche hierzu eine Einfüllöffnung aufweist. Die Edukte können dabei in fester Form, insbesondere als Granulat, aber auch geschmolzen und somit viskos der Einzugszone zugeführt werden. Die Edukte werden in der Einzugszone mittels der beiden Schnecken aufgenommen, weiter gefördert und verdichtet. In der Umwandlungszone, welche an die Einzugszone anschließt, erfolgt ein Aufschmelzen und Homogenisieren der Formmasse. In der Austragszone erfolgt ein weiteres Homogenisieren der als Schmelze vorliegenden Formmasse. Gegebenenfalls noch vorliegende Reste von Feststoffpartikeln werden noch aufgeschmolzen. Weiterhin erfolgt ein gleichmäßiges Verteilen der Stoffkomponenten. Auch die Temperatur der Schmelze wird vereinheitlicht. Ferner wird in der Austragszone ein für eine Granulierung erforderlicher Druck aufgebaut.

In der WO 98/13412 A1 werden Schneckenmaschinen beschrieben, die mindestens einen Abquetschabschnitt mit mindestens einem Stauelement und einer zugehörigen Entwässerungsöffnung stromaufwärts vor dem ersten Stauelement aufweisen. Darüber hinaus enthalten die Schneckenmaschinen Entgasungsabschnitte, die nach dem letzten Plastifizierungsabschnitt liegen. Die Entgasungsöffnungen und Entwässerungsöffnungen können mit einer Vorrichtung versehen sein, die das Austreten von Extrusionsgut verhindert. Rückhalteschnecken werden als für diesen Zweck bevorzugt beschrieben.

Auch die Entgasung und Entwässerung von thermoplastischen Formmassen mittels Schneckenmaschinen ist bekannt. Die EP 0 735 077 A1 beschreibt die Herstellung von schlagzähmodifizierten Thermoplasten durch mechanische Entwässerung einer elastomeren Komponente und Vermischen mit einem thermoplastischen Polymer in einer Schneckenmaschine. Die Entwässerungsöffnungen sind mit Rückhalteschnecken versehen und werden unter Überdruck betrieben.

In der JP H 02 286208 A werden drei unterschiedliche Entwässerungsverfahren mittels eines Extruders, der mit zwei Schnecken bestückt ist, offenbart. Der Extrusionsmasse wird jeweils Feuchtigkeit in flüssiger Form und zusätzlich gasförmig über Seiher-Gehäuse entzogen.

Das Dokument JP S 57 167303 A beschreibt, dass eine Extrusionsmasse, in diesem Falle z.B. Ausschlämmungen von Polymerteilchen, in einen Zweischneckenextruder dosiert, entwässert, entgast und geknetet wird. Flussaufwärts von der Kompressionszone kann Wasser in flüssiger Form aus dem Extruder austreten. Restfeuchte kann gasförmig entweichen. Als Entwässerungsöffnungen werden Seiher-Gehäuse verwendet.

Die JP S 60 222223 A offenbart ein Verfahren, bei dem einem Extrusionsgut, bevorzugt einem Lebensmittel aber auch anderen Materialien, Wasser in flüssiger Form entzogen wird. Die Entwässerung erfolgt mittels eines Zweischneckenextruders. Der Austrag der Feuchtigkeit erfolgt rückwärts durch eine Öffnung, die an eine Vakuumpumpe angeschlossen ist.

Aus WO 2004/028781 A1 geht eine Vorrichtung zum Extrudieren von Thermoplasten, insbesondere eine Schneckenmaschine, hervor. Die Vorrichtung umfasst dabei eine Entgasungsöffnung und eine Entwässerungsöffnung, welche beispielsweise mit einem Metalldrahtgewebe ausgerüstet ist.

Aus der WO 2015/004112 A1 ist ein gattungsgemäßes Verfahren zur Herstellung von thermoplastischen Formmassen mittels eines Extruders bekannt. Der Extruder umfasst dabei unter anderem einen Dosierabschnitt, in dem ein Wasser enthaltender Kautschuk zugeführt wird, einen Abquetschabschnitt, in dem der Kautschuk teilweise entwässert wird, und einen Zuführabschnitt, in dem ein Styrol-Acrylnitril-Copolymer (SAN) zugeführt wird. Der Kautschuk und das Styrol-Acrylnitril-Copolymer (SAN) werden dann zu der thermoplastischen Formmasse gemischt. Der Extruder enthält ferner einen Plastifizierungsabschnitt oder Durchmischungsabschnitt, in dem die thermoplastische Formmasse durchmischt wird, wodurch enthaltenes Wasser verdampft, einen Entgasungsabschnitt, in dem Wasserdampf aus der thermoplastischen Formmasse entfernt wird, und eine Austragszone, in der die thermoplastische Formmasse ausgetragen wird. Innerhalb des Extruders rotiert eine Extruderschnecke.

Die thermoplastische Formmasse innerhalb des Extruders, insbesondere innerhalb des Durchmischungsabschnitts, hat dabei eine Temperatur von beispielsweise 220-240°C, z.B. 230°C. Diese Temperatur wird hauptsächlich durch einen Wärmeeintrag durch von der rotierenden Extruderschnecke eingebrachte mechanische Energie erreicht. Zusätzlich ist es üblich, Gehäuse des Extruders von außen zu beheizen.

Der eingebrachte Kautschuk kann Salze enthalten, die in dem enthaltenen Wasser gelöst sind. Beim Verdampfen des Wassers entstehen somit Salzpartikel unterschiedlicher Größe. Die Verdampfung des Wassers findet unter anderem in dem Durchmischungsabschnitt statt.

Die größeren Salzpartikel können dann in der Austragszone Löcher einer Lochplatte oder einer Düsenleiste zumindest teilweise verstopfen. Bei einer Stranggranulierung wird dadurch ein Durchmesser eines ausgetragenen Fadens verkleinert. Wenn der Durchmesser des ausgetragenen Fadens zu stark verkleinert ist, kann es zu einem Abriss des Fadens kommen. Bei einer Unterwassergranulierung wird auch ein Durchmesser der ausgetragenen thermoplastischen Formmasse verkleinert. Nach dem Schneiden entstehen somit Granulatkörner mit verringertem Volumen und verringerter Masse. Ein solches verkleinertes Granulatkorn wird auch als Unterkorn bezeichnet.

Wenn verhältnismäßig große Salzpartikel die Löcher der Lochplatte in der Austragszone doch passieren, so sind diese später in der ausgetragenen granulierten thermoplastischen Formmasse enthalten und als Oberflächendefekte sichtbar, insbesondere, wenn die thermoplastische Formmasse zu dünnen Folien weiter verarbeitet wird. Bei Kontakt mit warmem Wasser können auch die kleineren Salzpartikel dann aufquellen und Salzstippen bilden, die ebenfalls in Form von Oberflächendefekten auf der thermoplastischen Formmasse sichtbar sind.

Der Erfindung liegt als Aufgabe zugrunde, eine Verstopfung von Löchern einer Lochplatte in der Austragszone eines Extruders zu verringern und die Bildung von Salzstippen in der ausgetragenen (granulierten) thermoplastischen Formmasse zu vermeiden.

Diese Aufgabe wird erfindungsgemäß durch ein Verfahren zur Herstellung einer thermoplastischen Formmasse mittels eines Extruders mit den Merkmalen des Anspruchs 1 gelöst. Weitere bevorzugte Ausführungen werden in den abhängigen Ansprüchen beansprucht.

Verschiedene thermoplastische Formmassen sowie thermoplastische Kunststoffe sind dem Fachmann seit Jahren bekannt, wie z.B. Polyamide, Polycarbonate, StyrolPolymere, Styrol-Copolymere oder Mischungen dieser Polymere. Zu den Styrol-Copolymeren zählen zum Beispiel Styrol/Acrylnitril-Copolymere (SAN), kautschukmodifizierte Styrol-Copolymere, wie Acrylnitril-Butadien-Styrol (ABS) und Acrylnitril-Styrol-Acrylat (ASA).

Gemäß eines gattungsgemäßen Verfahrens wie beispielsweise aus der bereits zitierten Druckschrift EP 0 735 077 A1 bekannt Z zur Herstellung einer thermoplastischen Formmasse wird ein Extruder verwendet, welcher mindestens eine Eintragszone, mindestens einen Durchmischungsabschnitt, mindestens einen Entgasungsabschnitt und mindestens eine Austragszone umfasst. Dabei werden in der mindestens einen Eintragszone eine Wasser enthaltende erste Komponente der thermoplastischen Formmasse sowie eine zweite Komponente der thermoplastischen Formmasse zugeführt, in dem mindestens einen Durchmischungsabschnitt wird die thermoplastische Formmasse durchmischt und enthaltenes Wasser wird verdampft, in dem mindestens einen Entgasungsabschnitt wird Wasserdampf aus der thermoplastischen Formmasse entfernt, und in der mindestens einen Austragszone wird die thermoplastische Formmasse ausgetragen. Die Austragszone weist dazu beispielsweise eine Lochplatte auf, durch deren Löcher die thermoplastische Formmasse ausgetragen wird.

Erfindungsgemäß kennzeichnend wird zumindest eines der beiden Durchmischungsgehäuse des zumindest einen Durchmischungsabschnitts auf einer Temperatur gehalten, die gleich oder geringer ist als eine Temperatur der thermoplastischen Formmasse innerhalb dieses zumindest einen Durchmischungsabschnitts, indem eine aktive Beheizung dieses zumindest einen Durchmischungsgehäuses unterbleibt, so dass zumindest dieses eine Durchmischungsgehäuse adiabatisch betrieben wird und dass zumindest ein Gehäuse des Entgasungsabschnitts mittels einer Temperiereinrichtung derart beheizt wird, dass eine Temperatur des Gehäuses des Entgasungsabschnitts höher ist als die Temperatur zumindest eines Durchmischungsgehäuses, und/oder dass zumindest ein Gehäuse der Austragszone mittels einer Temperiereinrichtung derart beheizt wird, dass eine Temperatur des Gehäuses der Austragszone höher ist als die Temperatur zumindest eines Durchmischungsgehäuses.

Es wurde überraschend herausgefunden, dass, wenn mindestens eines der Durchmischungsgehäuse des Durchmischungsabschnitts auf einer Temperatur gehalten wird, die gleich oder geringer ist als eine Temperatur der thermoplastischen Formmasse innerhalb des Durchmischungsabschnitts ist, beim Verdampfen des Wassers nur verhältnismäßig kleine Salzkristalle entstehen, welche in der thermoplastischen Formmasse verbleiben. Diese verhältnismäßig kleinen Salzkristalle können die Löcher der Lochplatte der Austragszone passieren, ohne diese zu verstopfen. Die verhältnismäßig kleinen Salzkristalle sind auch homogen in der thermoplastischen Formmasse verteilt und bilden, auch nach Kontakt mit warmem Wasser, keine auf der Oberfläche der thermoplastischen Formmasse sichtbaren Salzstippen.

Vorteilhaft ist die Temperatur, auf welcher zumindest eines der Durchmischungsgehäuse des Durchmischungsabschnitts gehalten wird, mindestens 10 K geringer als die Temperatur der thermoplastischen Formmasse innerhalb des Durchmischungsabschnitts. Vorzugsweise ist die Temperatur, auf welcher zumindest eines der Durchmischungsgehäuse des Durchmischungsabschnitts gehalten wird, mindestens 20 K geringer als die Temperatur der thermoplastischen Formmasse innerhalb des Durchmischungsabschnitts.

Gemäß der Erfindung wird zumindest ein Gehäuse des Entgasungsabschnitts mittels einer Temperiereinrichtung derart beheizt, dass eine Temperatur des Gehäuses des Entgasungsabschnitts höher ist als die Temperatur zumindest eines Durchmischungsgehäuses des Durchmischungsabschnitts.

Gemäß einer weiteren Ausgestaltung der Erfindung wird zumindest ein Gehäuse der Austragszone mittels einer Temperiereinrichtung derart beheizt, dass eine Temperatur des Gehäuses der Austragszone höher ist als die Temperatur zumindest eines Durchmischungsgehäuses des Durchmischungsabschnitts.

Gemäß einer vorteilhaften Ausgestaltung der Erfindung wird zumindest ein Gehäuse der Eintragszone mittels einer Temperiereinrichtung derart beheizt, dass eine Temperatur des Gehäuses der Eintragszone höher ist als die Temperatur zumindest eines Durchmischungsgehäuses des Durchmischungsabschnitts.

Die Wasser enthaltende erste Komponente der thermoplastischen Formmasse und die zweite Komponente der thermoplastischen Formmasse können gemäß einer möglichen Ausgestaltung der Erfindung gemeinsam in der Eintragszone dem Extruder zugeführt werden.

Gemäß einer vorteilhaften Weiterbildung der Erfindung umfasst die mindestens eine Eintragszone des Extruders mindestens einen Dosierabschnitt, mindestens einen Abquetschabschnitt und mindestens einen Zuführabschnitt. Dabei wird in dem mindestens einen Dosierabschnitt eine Wasser enthaltende erste Komponente der thermoplastische Formmasse zugeführt, in dem mindestens einen Abquetschabschnitt wird die erste Komponente der thermoplastischen Formmasse teilweise entwässert, und in dem mindestens einen Zuführabschnitt wird eine zweite Komponente der thermoplastischen Formmasse zugeführt.

Gemäß einer weiteren vorteilhaften Ausgestaltung der Erfindung wird zumindest ein Gehäuse des Zuführabschnitts derart mittels einer Temperiereinrichtung beheizt, dass eine Temperatur des Gehäuses des Zuführabschnitts höher ist als die Temperatur zumindest eines Durchmischungsgehäuses des Durchmischungsabschnitts.

Die erste Komponente der thermoplastischen Formmasse, die in den Dosierabschnitt der Eintragszone des Extruders zugeführt wird, ist bevorzugt ein Elastomer. Als Elastomer kann dabei jedes Polymer eingesetzt werden, das elastomere Eigenschaften hat und einem Extruder zugeführt werden kann. Es kann auch eine Mischung verschiedener Elastomere eingesetzt werden.

Bekannte Beispiele für solche Elastomere sind Polymere von konjugierten Dienen, wie Butadien, mit einer äußeren Pfropfhülle auf Basis einer vinylaromatischen Verbindung, wie etwa SAN-Copolymeren.

Gleichfalls bekannt sind Pfropfkautschuke auf Basis von vernetzten Polymerisaten aus C1-bis C12-Alkylestern der Acrylsäure wie n-Butylacrylat, Ethylhexylacrylat, gepfropft mit Polymeren auf der Grundlage vinylaromatischer Verbindungen wie SAN-Copolymeren. Gebräuchlich sind auch Pfropfkautschuke, die im Wesentlichen ein Copolymerisat aus konjugierten Dienen und C1-bis C12-Alkylacrylaten, beispielsweise ein Butadien-n-Butylacrylat-Copolymer, und eine äußere Pfropfstufe aus SAN-Copolymer, Polystyrol oder PMMA enthalten. Die Herstellung solcher Pfropfkautschuke nach den üblichen Verfahren, insbesondere durch Emulsions-oder Suspensionspolymerisation, ist bekannt.

Vorzugsweise ist die in dem Dosierabschnitt der Eintragszone des Extruders zugeführte erste Komponente der thermoplastischen Formmasse ein Kautschuk. Insbesondere liegt der Kautschuk dabei partikelförmig vor. Besonders bevorzugt sind solche Kautschuke, die eine aufgepfropfte Hülle aus anderen, in der Regel nicht elastomeren Polymeren aufweisen. Die dem Extruder als teilentwässertes Material zugeführten Pfropfkautschuk-Typen enthalten in einer bevorzugten Ausführungsform der Erfindung bis zu 50 Gewichts -%, besonders bevorzugt 25 Gewichts -% bis 40 Gewichts -% Restwasser.

Es können auch zwei- oder mehrstufig aufgebaute Pfropfkautschuke verwendet werden, bei denen die elastomeren Grund-oder Pfropfstufen durch Polymerisation eines oder mehrerer der Monomeren Butadien, Isopren, Chloropren, Styrol, Alkylstyrol, C1-bis C12-Alkylester der Acrylsäure oder der Methacrylsäure sowie geringer Mengen anderer, auch vernetzender Monomeren erhalten werden, und bei denen die harten Pfropfstufen aus einem oder mehreren der Monomeren Styrol, Alkylstyrol, Acrylnitril, Methylmethacrylat polymerisiert werden.

Bevorzugt sind Pfropfpartikel aus Polymeren auf Basis von Butadien/Styrol/Acrylnitril, n-Butylacrylat/Styrol/Acrylnitril, Butadien/n-Butylacrylat/Styrol/Acrylnitril, n-Butylacrylat/ Methylmethacrylat, n-Butylacrylat/Styrol/Methylmethacrylat, Butadien/Styrol/ Acrylnitril/Methylmethacrylat und Butadien/n-Butylacrylat/ Methylmethacrylat/Styrol/ Acrylnitril. In Kern oder Schale können bis zu 10 Gewichts-% funktionelle Gruppen tragende, polare Monomere oder auch vernetzend wirkende Monomere, einpolymerisiert sein.

Zur Herstellung von Acrylnitril-Butadien-Styrol (ABS) wird in dem Dosierabschnitt der Eintragszone des Extruders ein Kautschuk zugeführt, wobei der Kautschuk Polybutadien enthält. Dabei kann insbesondere um ein SAN-gepfropftes Polybutadien verwendet werden.

Zur Herstellung von Acrylnitril-Styrol-Acrylat (ASA) wird in dem Dosierabschnitt der Eintragszone des Extruders ein Kautschuk zugeführt, wobei der Kautschuk ein Acrylat, z.B. Butylacrylat-Komponente enthält. Aber auch ein SAN-gepfropftes Alkylacrylat kann beispielsweise verwendet werden.

Die zweite Komponente der thermoplastischen Formmasse, die in den Zuführabschnitt der Eintragszone des Extruders zugeführt wird, ist bevorzugt ein thermoplastisches Polymer (als Matrix), wie beispielsweise Styrol-Acrylnitril-Copolymer (SAN), Polystyrol, Polymethylmethacrylat, Polyvinylchlorid, Polyamid (z. Bsp. Terblend®) oder Mischungen dieser Polymere.

Geeignete thermoplastische Polymere sind auch Polycarbonate, Polyalkylenterephthalate wie Polybutylenterephthalat und Polyethylenterephthalat, Polyoxymethylen, Polymethylmethacrylat, Polyphenylensulfid, Polysulfone, Polyethersulfone und Polyamide und Mischungen dieser Thermoplaste. Außerdem können auch thermoplastische Elastomere wie beispielsweise thermoplastisches Polyurethan (TPU) verwendet werden.

Ebenso können als zweite Komponente Copolymere auf Basis von Styrol/ Maleinsäureanhydrid, Styrol/imidiertem Maleinsäureanhydrid, Styrol/Maleinsäureanhydrid/ imidiertem Maleinsäureanhydrid, Styrol/ Methylmethacrylat/imidiertem Maleinsäureanhydrid, Styrol/Methylmethacrylat, Styrol/Methylmethacrylat/Maleinsäureanhydrid, Methylmethacrylat/imidiertem Maleinsäureanhydrid, Styrol/imidiertem Methylmethacrylat, imidiertem PMMA oder Mischungen dieser Polymere verwendet werden.

Bei allen genannten thermoplastischen Polymeren kann das Styrol ganz oder teilweise durch alpha-Methylstyrol, oder durch kernalkylierte Styrole, oder durch Acrylnitril ersetzt sein. Von den zuletzt genannten thermoplastischen Polymeren eignen sich insbesondere solche auf Basis von alpha-Methylstyrol/Acrylnitril, Styrol/Maleinsäureanhydrid, Styrol/ Methylmethacrylat und Copolymere mit imidiertem Maleinsäureanhydrid.

Vorzugsweise ist die in dem Zuführabschnitt der Eintragszone des Extruders zugeführte zweite Komponente der thermoplastischen Formmasse ein Styrol-Acrylnitril-Copolymer (SAN).

Bevorzugt wird die zweite Komponente in dem Zuführabschnitt der Eintragszone des Extruders als Schmelze zugeführt.

Bevorzugt werden thermoplastische Polymere, die als zweite Komponente einsetzbar sind, durch kontinuierliche Substanz-oder Lösungspolymerisation hergestellt, wobei die erhaltene Schmelze, gegebenenfalls nach Entfernung der Lösungsmittel, beispielsweise mit einer Schmelzepumpe kontinuierlich direkt dem Zuführabschnitt der Eintragszone des Extruders zugeführt wird. Jedoch ist auch eine Herstellung durch Emulsions-, Suspensions- oder Fällungspolymerisation möglich, wobei in einem zusätzlichen Arbeitsschritt das Polymer von der flüssigen Phase getrennt wird. Einzelheiten der Herstellungsverfahren sind z.B. im Kunststoffhandbuch, Hrg. R. Vieweg und G. Daumiller, Bd. V, "Polystyrol", Carl-Hanser-Verlag, München, 1969, S. 118 bis S. 124 beschrieben.

Durch das erfindungsgemäße Verfahren wird eine thermoplastische Formmasse hergestellt, die beim Austrag aus der Austragszone des Extruders keine nennenswerte Verstopfung der Löcher die Lochplatte verursacht, und die keine auf ihrer Oberfläche sichtbaren Salzstippen aufweist.

Ausführungsformen der Erfindung werden anhand der folgenden Zeichnung, der nachfolgenden Beschreibung und der Ansprüche näher erläutert.

Es zeigt:

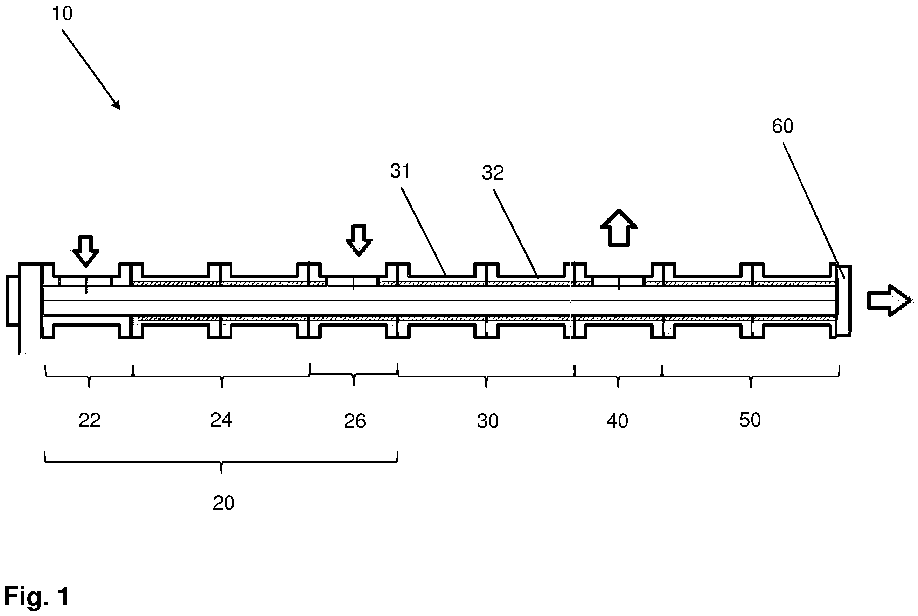

- Figur 1:: eine schematische Schnittdarstellung eines Extruders.

Ein in Figur 1 schematisch dargestellter Extruder 10 ist vorliegend als Doppelschneckenextruder ausgebildet. Der Extruder 10 weist dabei zwei Extruderschnecken auf, die um parallel verlaufende Drehachsen rotieren. Die beiden Extruderschnecken sind dabei innerhalb eines länglich ausgebildeten Gehäuses des Extruders 10 angeordnet. Der Extruder 10 dient zur Herstellung von thermoplastischen Formmassen, insbesondere Acrylnitril-Butadien-Styrol (ABS) oder Acrylnitril-Styrol-Acrylat (ASA).

In Förderrichtung, stromabwärts gesehen, weist der Extruder 10 einen Dosierabschnitt 22, einen Abquetschabschnitt 24, einen Zuführabschnitt 26, einen Durchmischungsabschnitt 30, einen Entgasungsabschnitt 40 und eine Austragszone 50 auf. Die einzelnen Abschnitte und Zonen des Extruders 10 weisen dabei Gehäuse auf, welche mittels Flanschen miteinander verbunden sind.

Der Dosierabschnitt 22 des Extruders 10 dient zur Zuführung einer Wasser enthaltenden ersten Komponente der herzustellenden thermoplastischen Formmasse. Der Abquetschabschnitt 24 des Extruders 10 dient zur teilweisen Entwässerung der ersten Komponente der thermoplastischen Formmasse. Der Zuführabschnitt 26 des Extruders 10 dient zur Zuführung einer zweiten Komponente der herzustellenden thermoplastischen Formmasse.

Der Abquetschabschnitt 24 ist dabei nicht zwingend erforderlich. Die Entwässerung kann auch beispielsweise in dem Durchmischungsabschnitt 30 erfolgen. Ferner ist der Zuführabschnitt 26 nicht zwingend erforderlich. Die zweite Komponente der thermoplastischen Formmasse kann auch gemeinsam mit der ersten Komponente der thermoplastischen Formmasse in dem Dosierabschnitt 22 dem Extruder 10 zugeführt werden.

Der Dosierabschnitt 22, der Abquetschabschnitt 24 und der Zuführabschnitt 26 bilden gemeinsam eine Eintragszone 20 des Extruders 10. Vorliegend weist die Eintragszone 20 mit dem Dosierabschnitt 22 und dem Zuführabschnitt 26 zwei Abschnitte zum Zuführen von Komponenten der herzustellenden thermoplastischen Formmasse auf. Es ist auch denkbar, dass die Eintragszone 20 nur einen solchen Abschnitt aufweist, welcher zum Zuführen aller Komponenten der herzustellenden thermoplastischen Formmasse dient. Die Eintragszone 20 des Extruders 10 dient somit dem Zuführen der Wasser-enthaltenden thermoplastischen Formmasse.

Der Durchmischungsabschnitt 30 des Extruders 10 dient zur Durchmischung der thermoplastischen Formmasse. Bei der Durchmischung wird auch in der thermoplastischen Formmasse enthaltenes Wasser verdampft. Der Entgasungsabschnitt 40 des Extruders 10 weist eine Entgasungsöffnung auf, durch welche Wasserdampf austreten kann und somit aus der thermoplastischen Formmasse entfernt wird.

Die Austragszone 50 des Extruders 10 dient zum Austragen der thermoplastischen Formmasse aus dem Extruder 10. Dazu weist die Austragszone 50 eine Lochplatte 60 auf, die mit mehreren Löchern versehen ist. Die thermoplastische Formmasse wird beim Austragen aus der Austragszone 50 dabei durch die Löcher der Lochplatte 60 gepresst. Anstelle der Lochplatte 60 kann auch eine Düsenleiste an der Austragszone 50 vorgesehen sein.

Der Dosierabschnitt 22, der Abquetschabschnitt 24, der Zuführabschnitt 26, der Durchmischungsabschnitt 30, der Entgasungsabschnitt 40 und die Austragszone 50 weisen jeweils Gehäuse auf, die mittels hier nicht dargestellter externer Temperiereinrichtungen temperierbar, insbesondere beheizbar sind. Bei den besagten externen Einrichtungen kann es sich dabei um elektrisch betriebene Heizeinrichtungen oder auch um von einer Flüssigkeit durchströmte Heizeinrichtungen sowie um Kühleinrichtungen handeln.

Der Durchmischungsabschnitt 30 weist vorliegend ein erstes Durchmischungsgehäuse 31 und ein zweites Durchmischungsgehäuse 32 auf. Das erste Durchmischungsgehäuse 31 des Durchmischungsabschnitts 30 ist dabei stromaufwärts gelegen und grenzt an den Zuführabschnitt 26 an. Das zweite Durchmischungsgehäuse 32 des Durchmischungsabschnitts 30 ist stromabwärts gelegen und grenzt an den Entgasungsabschnitt 40 an.

Die einzelnen externen Temperiereinrichtungen sind dabei unabhängig voneinander betreibbar. Somit können gezielt die Gehäuse von einzelnen Abschnitten oder Zonen des Extruders 10 beheizt oder gekühlt werden, während gleichzeitig eine Temperierung von Gehäusen von anderen Abschnitte oder Zonen des Extruders 10 unterbleibt. Insbesondere sind das erste Durchmischungsgehäuse 31 und das zweite Durchmischungsgehäuse 32 des Durchmischungsabschnitts 30 unabhängig voneinander temperierbar.

Zur Herstellung der thermoplastischen Formmasse wird in den Dosierabschnitt 22 des Extruders 10 die erste Komponente der herzustellenden thermoplastischen Formmasse, die Wasser enthält, eingeführt. Bei der ersten Komponente handelt es sich vorliegend um einen partikelförmigen Kautschuk, der einen Anteil an Wasser von 1 bis 40, bevorzugt 20 bis 35, insbesondere etwa 30 Gewichts -% aufweist.

Der in den Dosierabschnitt 22 eingeführte Kautschuk wird von der Doppelschnecke des Extruders 10 in den Abquetschabschnitt 24 transportiert. In dem Abquetschabschnitt 24 findet eine teilweise Entwässerung des Kautschuks statt. Das Gehäuse des Abquetschabschnitts 24 wird dabei mittels der nicht dargestellten Temperiereinrichtung temperiert, insbesondere gekühlt.

In den Zuführabschnitt 26 des Extruders 10 wird die zweite Komponente der herzustellenden thermoplastischen Formmasse eingeführt. Bei der zweiten Komponente handelt es sich vorliegend um Styrol-Acrylnitril-Copolymer (SAN).

Das Styrol-Acrylnitril-Copolymer (SAN) wird dabei als Schmelze in den Zuführabschnitt 26 eingeführt. Das Gehäuse des Zuführabschnitts 26 wird dabei mittels der nicht dargestellten Heizeinrichtung beheizt.

Der Kautschuk wird dabei von der Doppelschnecke des Extruders 10 aus dem Abquetschabschnitt 24 in den Zuführabschnitt 26 transportiert und mit dem in den Zuführabschnitt 26 eingeführten Styrol-Acrylnitril-Copolymer (SAN) zu der thermoplastischen Formmasse gemischt. Die thermoplastische Formmasse wird von der Doppelschnecke des Extruders 10 von dem Zuführabschnitt 26 weiter in den Durchmischungsabschnitt 30 transportiert. In dem Durchmischungsabschnitt 30 des Extruders 10 findet eine weitere Durchmischung der thermoplastischen Formmasse statt.

Die thermoplastische Formmasse innerhalb des Durchmischungsabschnitts 30 hat dabei eine gemessene Temperatur von etwa 230°C. Bei der weiteren Durchmischung in dem Durchmischungsabschnitt 30 des Extruders 10 wird auch Wasser, das in der thermoplastischen Formmasse noch enthalten ist, verdampft. Der durch die Verdampfung entstehende Wasserdampf tritt durch eine in dem Entgasungsabschnitt 40 vorgesehene Entgasungsöffnung aus dem Extruder 10 aus. Somit wird der durch die Verdampfung entstandene Wasserdampf aus der thermoplastischen Formmasse entfernt.

Die thermoplastische Formmasse wird von der Doppelschnecke des Extruders 10 von dem Durchmischungsabschnitt 30 weiter in den Entgasungsabschnitt 40 transportiert, in dem der entstandene Wasserdampf durch die Entgasungsöffnung aus dem Extruder 10 austritt.

Von dem Entgasungsabschnitt 40 wird die thermoplastische Formmasse von der Doppelschnecke des Extruders 10 weiter zu der Austragszone 50 transportiert. In der Austragszone 50 wird die thermoplastische Formmasse aus dem Extruder 10 ausgetragen. Die wird die thermoplastische Formmasse durch die Löcher in der Lochplatte 60 aus dem Extruder 10 gepresst.

Die aus dem Extruder 10 ausgetragene thermoplastische Formmasse wird anschließend in einer hier nicht dargestellten Granuliereinheit granuliert. Vorzugsweise findet die Granulierung dabei als Unterwassergranulierung statt. Dabei werden aus den Löchern 60 der Lochplatte 50 austretende Fäden mittels eines rotierenden Messers auf eine vorgegebene Länge geschnitten. Das Messer sowie die austretende Fäden befinden sich dabei in einer Wasserkammer. Nach dem Schneiden entstehen somit Granulatkörner. Alternativ ist auch eine Stranggranulierung in einem Wasserbad durchführbar. Die Erfindung wird durch die Beispiele und Ansprüche erläutert.

Bei einem aus dem Stand der Technik bekannten Verfahren zur Herstellung einer thermoplastischen Formmasse werden das erste Durchmischungsgehäuse 31 und das zweite Durchmischungsgehäuse 32 des Durchmischungsabschnitts 30 auf eine Temperatur von etwa 240°C erwärmt. Es ergibt sich eine durchschnittliche Standzeit von 15 Tagen. Die Standzeit ist dabei die Zeit, während welcher der Extruder 10 die thermoplastische Formmasse ohne Unterbrechung produziert.

Die Standzeit endet vorliegend, wenn die Löcher in der Lochplatte 60 oder die Löcher in der Düsenleiste des Extruders 10 teilweise oder ganz verstopft sind, und die Lochplatte 60 oder die Düsenleiste gereinigt werden muss.

In einem ersten Versuch zur Herstellung einer thermoplastischen Formmasse wird das erste Durchmischungsgehäuse 31 des Durchmischungsabschnitts 30 auf eine Temperatur von etwa 240°C erwärmt. Das zweite Durchmischungsgehäuse 32 wird adiabatisch betrieben. Es ergibt sich eine Standzeit von etwa 30 Tagen.

In einem zweiten Versuch zur Herstellung einer thermoplastischen Formmasse wird das zweite Durchmischungsgehäuse 32 des Durchmischungsabschnitts 30 auf eine Temperatur von etwa 240°C erwärmt. Das erste Durchmischungsgehäuse 31 wird adiabatisch betrieben. Es ergibt sich ebenfalls eine Standzeit von 30 Tagen.

In einem dritten Versuch zur Herstellung einer thermoplastischen Formmasse werden das erste Durchmischungsgehäuse 31 und das zweite Durchmischungsgehäuse 32 des Durchmischungsabschnitts 30 adiabatisch betrieben. Es ergibt sich eine Standzeit von 40 Tagen.

In einem vierten Versuch zur Herstellung einer thermoplastischen Formmasse wird das erste Durchmischungsgehäuse 31 des Durchmischungsabschnitts 30 auf eine Temperatur von etwa 200°C temperiert. Das zweite Durchmischungsgehäuse 32 wird ebenfalls auf eine Temperatur von etwa 200°C temperiert. Es ergibt sich eine Standzeit von 45 Tagen. In einem fünften Versuch zur Herstellung einer thermoplastischen Formmasse wird das erste Durchmischungsgehäuse 31 des Durchmischungsabschnitts 30 auf eine Temperatur von etwa 200°C temperiert. Das zweite Durchmischungsgehäuse 32 wird auf eine Temperatur von etwa 240°C temperiert. Es ergibt sich eine Standzeit von 40 Tagen.

### Bezugszeichenliste

- 10: Extruder
- 20: Eintragszone
- 22: Dosierabschnitt
- 24: Abquetschabschnitt
- 26: Zuführabschnitt
- 30: Durchmischungsabschnitt
- 31: erstes Durchmischungsgehäuse
- 32: zweites Durchmischungsgehäuse
- 40: Entgasungsabschnitt
- 50: Austragszone
- 60: Lochplatte

## Patentansprüche

1. Verfahren zur Herstellung einer thermoplastischen Formmasse mittels eines Extruders (10), welcher
mindestens eine Eintragszone (20),
mindestens einen Durchmischungsabschnitt (30),
mindestens einen Entgasungsabschnitt (40) und
mindestens eine Austragszone (50) umfasst, wobei
in der mindestens einen Eintragszone (20) eine Wasser enthaltende erste Komponente der thermoplastischen Formmasse sowie eine zweite Komponente der thermoplastischen Formmasse zugeführt werden,
in dem mindestens einen Durchmischungsabschnitt (30) aufweisend ein erstes Durchmischungsgehäuse (31) und ein zweites Durchmischungsgehäuse (32) die thermoplastische Formmasse durchmischt wird und enthaltenes Wasser verdampft wird,
in dem mindestens einen Entgasungsabschnitt (40) Wasserdampf aus der thermoplastischen Formmasse entfernt wird, und
in der mindestens einen Austragszone (50) die thermoplastische Formmasse ausgetragen wird,
**dadurch gekennzeichnet, dass**
zumindest eines der beiden Durchmischungsgehäuse (31, 32) des zumindest einen Durchmischungsabschnitts (30) auf einer Temperatur gehalten wird, die gleich oder geringer ist als eine Temperatur der thermoplastischen Formmasse innerhalb dieses zumindest einen Durchmischungsabschnitts (30), indem eine aktive Beheizung dieses zumindest einen Durchmischungsgehäuses (31, 32) unterbleibt, so dass zumindest dieses eine Durchmischungsgehäuse (31, 32) adiabatisch betrieben wird und dass
zumindest ein Gehäuse des Entgasungsabschnitts (40) mittels einer Temperiereinrichtung derart beheizt wird, dass eine Temperatur des Gehäuses des Entgasungsabschnitts (40) höher ist als die Temperatur zumindest eines Durchmischungsgehäuses (31, 32), und/oder dass
zumindest ein Gehäuse der Austragszone (50) mittels einer Temperiereinrichtung derart beheizt wird, dass eine Temperatur des Gehäuses der Austragszone (50) höher ist als die Temperatur zumindest eines Durchmischungsgehäuses (31, 32).

2. Verfahren nach Anspruch 1, **dadurch gekennzeichnet, dass** die Temperatur, auf welcher zumindest eines der Durchmischungsgehäuse (31, 32) gehalten wird, mindestens 10 K, vorzugsweise mindestens 20 K geringer ist als die Temperatur der thermoplastischen Formmasse innerhalb des Plastifizierungsabschnitts (30).

3. Verfahren nach einem der vorstehenden Ansprüche, **dadurch gekennzeichnet, dass** zumindest ein Gehäuse der Eintragszone (20) mittels einer Temperiereinrichtung derart beheizt wird, dass eine Temperatur des Gehäuses der Eintragszone (20) höher ist als die Temperatur zumindest eines Durchmischungsgehäuses (31, 32).

4. Verfahren nach einem der vorstehenden Ansprüche, **dadurch gekennzeichnet, dass** die Wasser enthaltende erste Komponente der thermoplastischen Formmasse und die zweite Komponente der thermoplastischen Formmasse gemeinsam in der Eintragszone (20) zugeführt werden.

5. Verfahren nach einem der Ansprüche 1 bis 3, **dadurch gekennzeichnet, dass** die mindestens eine Eintragszone (20)
mindestens einen Dosierabschnitt (22),
mindestens einen Abquetschabschnitt (24) und
mindestens einen Zuführabschnitt (26) umfasst, wobei
in dem mindestens einen Dosierabschnitt (22) die Wasser enthaltende erste Komponente der thermoplastischen Formmasse zugeführt wird,
in dem mindestens einen Abquetschabschnitt (24) die erste Komponente der thermoplastischen Formmasse teilweise entwässert wird, und
in dem mindestens einen Zuführabschnitt (26) die zweite Komponente der thermoplastischen Formmasse zugeführt wird.

6. Verfahren nach Anspruch 5, **dadurch gekennzeichnet, dass** zumindest ein Teil eines Gehäuses des Zuführabschnitts (26) mittels einer Temperiereinrichtung derart beheizt wird, dass eine Temperatur des Teils des Gehäuses des Zuführabschnitts (26) höher ist als die Temperatur zumindest eines Teils des Durchmischungsgehäuses (31, 32).

7. Verfahren nach einem der Ansprüche 5 bis 6, **dadurch gekennzeichnet, dass** die in dem mindestens einen Dosierabschnitt (22) zugeführte erste Komponente ein Kautschuk ist.

8. Verfahren nach Anspruch 7, **dadurch gekennzeichnet, dass** der Kautschuk mindestens ein Polybutadien enthält.

9. Verfahren nach Anspruch 7, **dadurch gekennzeichnet, dass** der Kautschuk mindestens einen Acrylat-Kautschuk, insbesondere einen Butylacrylat-Kautschuk enthält.

10. Verfahren nach einem der Ansprüche 5 bis 9, **dadurch gekennzeichnet, dass** die in dem mindestens einen Zuführabschnitt (26) zugeführte zweite Komponente ein Styrol-Acrylnitril-Copolymer (SAN) ist.

11. Verfahren nach einem der Ansprüche 5 bis 10, **dadurch gekennzeichnet, dass** die zweite Komponente in dem mindestens einen Zuführabschnitt (26) als Schmelze zugeführt wird.

## Claims

1. Process for the production of a thermoplastic moulding composition by means of an extruder (10) which comprises
at least one feed zone (20),
at least one mixing section (30),
at least one venting section (40) and
at least one discharge zone (50), where in the at least one feed zone (20) a water-containing first component of the thermoplastic moulding composition, and also a second component of the thermoplastic moulding composition, are introduced,
in the at least one mixing section (30) comprising a first mixing barrel section (31) and a second mixing barrel section (32) the thermoplastic moulding composition is mixed and water present is evaporated,
in the at least one venting section (40) water vapour is removed from the thermoplastic moulding composition, and
in the at least one discharge zone (50) the thermoplastic moulding composition is discharged, **characterized in that**
at least one of the two mixing barrels sections (31, 32) of the at least one mixing section (30) is maintained at a temperature which is the same as or lower than a temperature of the thermoplastic moulding composition within in this at least one mixing section (30) **in that**
no active heating of this at least one mixing barrel section (31, 32) takes place, and therefore at least this one mixing barrel section (31, 32) is operated adiabatically and that
at least one barrel section of the venting section (40) is heated by means of temperature-control equipment in a manner such that a temperature of the barrel section of the venting section (40) is higher than the temperature of at least one mixing barrel section (31, 32) and/or that
at least one barrel section of the discharge zone (50) is heated by means of temperature-control equipment in a manner such that a temperature of the barrel section of the discharge zone (50) is higher than the temperature at least of one mixing barrel section (31, 32).

2. Process according to Claim 1, **characterized in that** the temperature at which at least one of the mixing barrel sections (31, 32) is maintained is lower by at least 10 K, preferably at least 20 K, than the temperature of the thermoplastic moulding composition within the plastifying section (30).

3. Process according to any of the preceding claims, **characterized in that** at least one barrel section of the feed zone (20) is heated by means of temperature-control equipment in a manner such that a temperature of the barrel section of the feed zone (20) is higher than the temperature of at least one mixing barrel section (31, 32).

4. Process according to any of the preceding claims, **characterized in that** the water-containing first component of the thermoplastic moulding composition and the second component of the thermoplastic moulding composition are introduced together in the feed zone (20).

5. Process according to any of Claims 1 to 3, **characterized in that**
the at least one feed zone (20) comprises
at least one addition section (22),
at least one squeeze section (24) and
at least one input section (26), where
in the at least one addition section (22) the water-containing first component of the thermoplastic moulding composition is introduced,
in the at least one squeeze section (24) the first component of the thermoplastic moulding composition is to some extent dewatered, and
**in that** at least one input section (26) the second component of the thermoplastic moulding composition is introduced.

6. Process according to Claim 5, **characterized in that** at least a portion of a barrel section of the input section (26) is heated by means of temperature-control equipment in a manner such that a temperature of the portion of the barrel section of the input section (26) is higher than the temperature at least of one portion of the mixing barrel section (31, 32).

7. Process according to Claim 5 or 6, **characterized in that** the first component introduced in the at least one addition section (22) is a rubber.

8. Process according to Claim 7, **characterized in that** the rubber comprises at least one polybutadiene.

9. Process according to Claim 7, **characterized in that** the rubber comprises at least one acrylate rubber, in particular one butyl acrylate rubber.

10. Process according to any of Claims 5 to 9, **characterized in that** the second component introduced in the at least one input section (26) is a styreneacrylonitrile copolymer (SAN).

11. Process according to any of Claims 5 to 10, **characterized in that** the second component is introduced as melt in the at least one input section (26).

## Revendications

1. Procédé pour la préparation d'une masse de moulage thermoplastique au moyen d'une extrudeuse (10), comprenant
au moins une zone d'introduction (20),
au moins une section de mélange (30),
au moins une section de dégazage (40) et
au moins une zone d'évacuation (50), dans lequel,
dans ladite au moins une zone d'introduction (20), un premier composant contenant de l'eau est amené dans la masse de moulage thermoplastique et un deuxième composant est amené dans la masse de moulage thermoplastique,
dans ladite au moins une section de mélange (30) qui présente un premier carter de mélange (31) et un deuxième carter de mélange (32), la masse de moulage thermoplastique est mélangée et l'eau contenue est évaporée,
dans ladite au moins une section de dégazage (40), la vapeur d'eau est éliminée de la masse de moulage thermoplastique, et
dans ladite au moins une zone d'évacuation (50), la masse de moulage thermoplastique est évacuée,
**caractérisé en ce que**
au moins l'un des deux carters de mélange (31, 32) de ladite au moins une section de mélange (30) est maintenu à une température qui est égale ou inférieure à une température de la masse de moulage thermoplastique à l'intérieur de ladite au moins une section de mélange (30),
**en ce qu'**un chauffage actif dudit au moins un carter de mélange (31, 32) est omis de sorte qu'au moins ledit un carter de mélange (31, 32) fonctionne de manière adiabatique, et
**en ce qu'**au moins un carter de la section de dégazage (40) est chauffé au moyen d'un dispositif d'équilibrage de température de telle sorte qu'une température du carter de la section de dégazage (40) est supérieure à la température d'au moins un carter de mélange (31, 32), et/ou
**en ce qu'**au moins un carter de la zone d'évacuation (50) est chauffé au moyen d'un dispositif d'équilibrage de température de telle sorte qu'une température du carter de la zone d'évacuation (50) est supérieure à la température d'au moins un carter de mélange (31, 32).

2. Procédé selon la revendication 1, **caractérisé en ce que** la température à laquelle au moins l'un des carters de mélange (31, 32) est maintenu, est inférieure d'au moins 10 K, de préférence d'au moins 20 K, à la température de la masse de moulage thermoplastique à l'intérieur de la section de plastification (30).

3. Procédé selon l'une quelconque des revendications précédentes, **caractérisé en ce qu'**au moins un carter de la zone d'introduction (20) est chauffé au moyen d'un dispositif d'équilibrage de température de telle sorte qu'une température du carter de la zone d'introduction (20) est supérieure à la température d'au moins un carter de mélange (31, 32).

4. Procédé selon l'une quelconque des revendications précédentes, **caractérisé en ce que** le premier composant contenant de l'eau de la masse de moulage thermoplastique et le deuxième composant de la masse de moulage thermoplastique sont amenés ensemble dans la zone d'introduction (20).

5. Procédé selon l'une quelconque des revendications 1 à 3, **caractérisé en ce que**
ladite au moins une zone d'introduction (20) comprend
au moins une section de dosage (22),
au moins une section d'appui (24), et
au moins une section d'amenée (26), dans lequel
dans ladite au moins section de dosage (22), le premier composant contenant de l'eau est amené dans la masse de moulage thermoplastique,
dans ladite au moins une section d'appui (24), le premier composant de la masse de moulage thermoplastique est partiellement déshydraté, et
dans ladite au moins une section d'amenée (26), le deuxième composant est amené dans la masse de moulage thermoplastique.

6. Procédé selon la revendication 5, **caractérisé en ce qu'**au moins une partie d'un carter de la section d'amenée (26) est chauffée au moyen d'un dispositif d'équilibrage de température de telle sorte qu'une température de la partie du carter de la section d'amenée (26) est supérieure à la température d'au moins une partie du carter de mélange (31, 32).

7. Procédé selon une quelconque des revendications 5 et 6, **caractérisé en ce que** le premier composant amené dans ladite au moins une section de dosage (22) est du caoutchouc.

8. Procédé selon la revendication 7, **caractérisé en ce que** le caoutchouc contient au moins du polybutadiène.

9. Procédé selon la revendication 7, **caractérisé en ce que** le caoutchouc contient au moins du caoutchouc acrylate, en particulier du caoutchouc acrylate de butyle.

10. Procédé selon une quelconque des revendications 5 à 9, **caractérisé en ce que** le deuxième composant amené dans ladite au moins une section d'amenée (26) est un copolymère de styrène-acrylonitrile (SAN).

11. Procédé selon une quelconque des revendications 5 à 10, **caractérisé en ce que** le deuxième composant est amené dans ladite au moins une section d'amenée (26) sous forme de masse fondue.
